Europäisches Patentamt

European Patent Office

Office européen des brevets

(11) Publication number: **0 528 105 A1**

# EUROPEAN PATENT APPLICATION

(21) Application number: **92105538.0**

(22) Date of filing: **31.03.92**

(51) Int. Cl.5: **H04N 7/18**, H04N 5/14, G08B 13/196

(30) Priority: **15.08.91 JP 205168/91**

(43) Date of publication of application:
**24.02.93 Bulletin 93/08**

(84) Designated Contracting States:
**DE FR GB**

(71) Applicant: **PIONEER ELECTRONIC CORPORATION**
**No. 4-1, Meguro 1-chome**
**Meguro-ku Tokyo 153(JP)**

(72) Inventor: **Watanabe, Tsuyoshi, c/o Pioneer Electronic Corp.**
**Tokorozawa Kojo, 2610, Hanazono 4-chome**
**Tokorozawa-shi, Saitama 359(JP)**

(74) Representative: **Reinhard, Skuhra, Weise**
**Friedrichstrasse 31**
**W-8000 München 40 (DE)**

(54) **Picture image monitoring system.**

(57) A picture image monitoring system wherein a change of a picture image of a monitoring object area can be detected automatically with a high degree of accuracy. The picture image monitoring system comprises a filter circuit (5) for extracting a picture image characteristic from a picture image of a monitoring object area, a binary digitizing circuit (2) for converting the extracted characteristic picture image into a binary picture image, a picture image change detecting section (10) for detecting a change of the binary picture image using a first threshold value, an average value calculating circuit (6) for calculating a picture element density average value of the characteristic picture image, and a variation calculating circuit (9) for calculating a variation of the picture element density average value with respect to another picture element density average value in the past. The binary digitizing circuit (7) uses the picture element density average value as a second threshold value upon binary digitization thereby while the picture image change detecting section corrects the first threshold value using the variation.

FIG. 1

# BACKGROUND OF THE INVENTION

## 1. Field of the Invention

This invention relates to a picture image monitoring system for automatically detecting a change of a picture image of a monitoring object area.

## 2. Description of the Prior Art

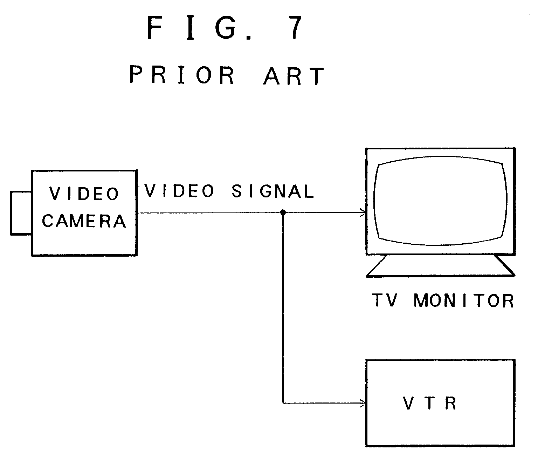

An exemplary one of conventional picture image monitoring systems of the type mentioned is a monitoring camera system for the prevention of crimes. One of such conventional monitoring camera systems is shown in FIG. 7. Referring to FIG. 7, the monitoring camera system shown includes a video camera positioned to photograph a monitoring object area, and a TV (television) monitor and a video tape recorder (VTR) both connected to the video camera. A picture image of the monitoring object area is photographed by the video camera and recorded by the VTR while it is displayed on the TV monitor. A watching operation of the TV monitor and a judging operation for occurrence of an abnormal condition are performed by a watchman.

In this manner, with a conventional monitoring camera system for the prevention of crimes or a like monitoring system, a watching operation of a screen and a judging operation for occurrence of an abnormal condition all rely upon manual operation. Consequently, there is a problem that the accuracy in monitoring depends to a great extent upon fatigue or increase in stress of a watchman or upon a difference in capacity between individual watchmen. Further, where manual operation is relied upon, the detecting accuracy is high for such a great change of a picture image that occurs over an entire screen, but it is a problem that a change of a picture image which occurs at a limited portion of a screen is likely overlooked.

# SUMMARY OF THE INVENTION

It is an object of the present invention to provide a picture image monitoring system which can automatically detect a change of a picture image of a monitoring object area with a high degree of accuracy.

In order to attain the object, according to the present invention, there is provided a picture image monitoring system, which comprises a filter circuit for extracting a predetermined picture image characteristic from a picture image signal of a monitoring object area, a binary digitizing circuit for converting an extracted characteristic picture image received from the filter circuit into a binary picture image, and a picture image change detecting section for comparing a binary picture image of the monitoring object area at present received from the binary digitizing circuit and another binary picture image of the monitoring object area in the past with each other to detect a change of the picture image using a predetermined first threshold value.

With the picture image monitoring system, the filter circuit extracts, from a picture image signal of a monitoring object area, a predetermined picture image characteristic which is suitable for the detection of a change of a picture image such as an edge of a picture image, and the binary digitizing circuit converts an extracted characteristic picture image received from the filter circuit into a binary picture image using a predetermined threshold value.

The picture image change detecting section calculates, using a binary picture image of the monitoring object area at present obtained in this manner and another binary picture image of the monitoring object area in the past, a number of picture elements in the picture image which have changed in density and judges the picture element number using the predetermined first threshold value to detect a change of the picture image of the monitoring object area. Accordingly, the monitoring object area can be monitored using an optimum picture image characteristic in accordance with a picture image property of the monitoring object area and a purpose of monitoring, and a picture image change of the monitoring object area can be detected with a high degree of accuracy.

Preferably, the picture image monitoring system further comprises an average value calculating circuit for calculating a picture element density average value of an extracted characteristic picture image received from the filter circuit, and a variation calculating circuit for calculating a variation of a picture element density average value received from the average value calculating circuit with respect to another picture element density average value in the past, the binary digitizing circuit using a picture element density average value received from the average value calculating circuit as a second threshold value upon binary digitization thereby, the picture image change detecting section correcting the first threshold value using a variation of a picture element density average value received from the variation calculating circuit.

With the picture image monitoring system, a picture element density average value obtained by the average value calculating circuit is used as the second threshold value with which the binary digitizing circuit binary digitizes an extracted characteristic picture image received from the filter circuit. Consequently, the second threshold value for the binary digitization is varied adaptively in response, for example, to a brightness of the monitoring object area, and accordingly, even if the brightness of the monitoring object area changes, an optimum binary picture image to monitoring of a change of a picture image can always be obtained.

Further, the picture image change detecting section corrects, using a variation of a picture element density average value of an extracted characteristic picture image obtained by the variation calculating circuit, the first threshold value with which the picture image change detecting section judges a change of a picture image. Consequently, the first threshold value can be changed adaptively in response, for example, to a brightness of the monitoring object area. Accordingly, detection of a picture image change can be achieved with a higher degree of accuracy together with binary digitizing processing using a picture element density average value.

The above and other objects, features and advantages of the present invention will become apparent from the following description and the appended claims, taken in conjunction with the accompanying drawings.

## BRIEF DESCRIPTION OF THE DRAWINGS

FIG. 1 is a block diagram of a picture image monitoring system showing a preferred embodiment of the present invention;

FIG. 2 is a diagrammatic view illustrating difference calculating processing;

FIG. 3 is a similar view but illustrating another difference calculating processing;

FIGS. 4a and 4b are diagrammatic views illustrating noise removing processing;

FIGS. 5a to 5d are similar views but illustrating another noise removing processing;

FIG. 6 is a diagrammatic view illustrating algorithm of difference degree calculating processing executed by a picture image change detecting section; and

FIG. 7 is a diagrammatic representation showing an exemplary construction of a conventional monitoring camera system.

## DESCRIPTION OF THE PREFERRED EMBODIMENT

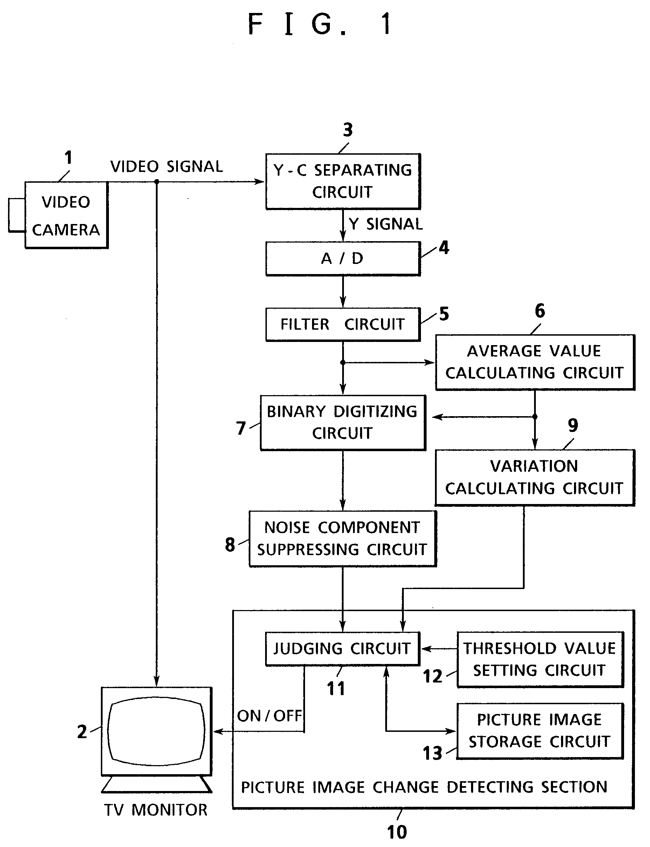

Referring first to FIG. 1, there is shown a picture image monitoring system according to a preferred embodiment of the present invention. The picture image monitoring system shown includes a video camera 1 serving as an image pickup apparatus and installed fixedly toward a predetermined monitoring object area for photographing the monitoring object area. A video signal (color composite signal) photographed by the video camera 1 is sent to a TV monitor 2 and a Y-C separating circuit 3.

The TV monitor 2 is a display apparatus constituted from a Braun tube for reflecting a photographed picture image of the video camera 1 thereon and peripheral circuits around the Braun tube. When a change of the picture image of the monitoring object area is detected by a picture image change detecting section 10, a monitor switch not shown of the TV monitor 2 is switched on in response to an ON/OFF controlling signal transmitted thereto from the picture image change detecting section 10 so that the picture image of the monitoring object area being photographed by the video camera 1 is reflected on a screen of the TV monitor 2.

The Y-C separating circuit 3 receives a video signal (color composite signal) of the monitoring object area photographed by the video camera 1 and separates it into a brightness (Y) signal and a color difference (C) signal. In the picture image monitoring system of FIG. 1, detecting processing of a change of a picture image is performed using the Y signal of the thus separated Y and C signals.

An A/D (analog to digital) converter 4 receives a Y signal separated by the Y-C separating circuit 3 and converts it from an analog signal into a digital signal which is convenient for digital signal processing.

A filter circuit 5 stores a Y signal transmitted thereto from the A/D converter 4 once into a frame memory not shown and then applies predetermined filtering processing to a picture image of the monitoring object area provided by the Y signal to extract a predetermined picture image characteristic portion of the picture image such as, for example, an edge (profile). Such filtering processing may be any optimum processing such as high frequency component extraction, low frequency component extraction or band-pass component extraction and may be selected in accordance with a characteristic of the picture image of the monitoring object area and a purpose for the monitoring. It is to be noted that, in the present embodiment, description will be given by way of an example of a case wherein difference calculating (high component extracting) processing for extracting an edge of a picture image is adopted.

An average value calculating circuit 6 calculates a picture element density average value of an extracted characteristic picture image of the monitoring object area outputted from the filter circuit 5. The thus calculated picture element density average value indicates a degree of brightness of the monitoring object area at the point of time.

A binary digitizing circuit 7 receives an extracted characteristic picture image (difference picture image) of the monitoring object area outputted from the filter circuit 5 and binary digitizes the extracted characteristic picture image using a picture element density average value calculated by the average value calculating circuit 6 as a threshold value to convert the extracted characteristic picture image into a binary picture image composed of the binary values of "1" and "0".

A noise component suppressing circuit 8 effects noise removing processing to remove noise components from a binary picture image received from the binary digitizing circuit 7.

A variation calculating circuit 9 stores a picture image density average values of the last frame or frames transmitted thereto from the average value calculating circuit 6 and calculates, using the picture element density average value or values in the past and a picture image density average value at present transmitted thereto from the average value calculating circuit 6, a variation of the picture element density average value at present with respect to the picture element density average value or values in the past.

The picture image change detecting section 10 detects a change of a picture image of the monitoring object area from input signals of a binary picture image of the monitoring object area transmitted thereto from the noise component suppressing circuit 8 and a variation of a picture element density average value transmitted thereto from the variation calculating circuit 9. The picture image change detecting section 10 includes a judging circuit 11 for detecting a picture image change of a binary picture image of the monitoring object area, a threshold value setting circuit 12 for setting a threshold value for the judgment of a picture image change, and a picture image storage circuit 13 for storing therein a binary picture image or images of the last frame or frames in the past necessary for the judging processing.

In operation, a video signal of the monitoring object area photographed by the video camera 1 is sent to the TV monitor 2 and Y-C separating circuit 3. The TV monitor 2 is automatically switched on when a picture image change of the monitoring object area is detected by the picture image change detecting section 10, but normally a picture image of the monitoring object area photographed by the video camera 1 is not reflected on the screen of the TV monitor 2.

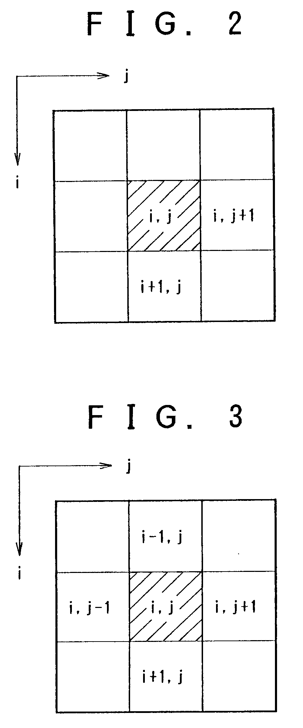

The filter circuit 5 stores a Y signal for one frame of the monitoring object area transmitted thereto by way of the A/D converter 4 into the frame memory not shown. Then, such difference calculating processing as illustrated in FIG. 2 or 3 is applied to the thus stored picture image data to produce a difference picture image of the monitoring object area.

According to the difference calculating processing illustrated in FIG. 2, when a picture element at the i-th position in the vertical direction and at the j-th position in the horizontal direction is determined as a processing object picture element $y(i, j)$, a difference value $\Delta y(i, j)$ of the processing object picture element $y(i, j)$ is calculated in accordance with the following expression:

$$\Delta y(i, j) = y(i, j+1) + y(i+1, j) - 2y(i, j)$$

Meanwhile, according the difference calculating processing illustrated in FIG. 3, which is called Laplacian processing, a difference value $\Delta y(i, j)$ of the processing object picture element $y(i, j)$ is calculated in accordance with the following expression:

$$\Delta y(i, j) = y(i-1, j) + y(i, j-1) + y(i, j+1) + y(i+1, j) - 4y(i, j)$$

It is to be noted that, in case a value of the difference value $\Delta y(i, j)$ obtained in accordance with either of the expressions is in the negative, the value is replaced by 0.

A difference picture image of the monitoring object area obtained by the difference calculation processing of FIG. 2 or 3 described above is an edge picture image which is formed only from an edge or profile extracted as a picture image characteristic from an original picture image. The difference picture image of the monitoring object area obtained in this manner is sent to the binary digitizing circuit 7 and average value calculating circuit 6.

The average value calculating circuit 6 adds $\{\Sigma\Delta y(i, j)\}$ difference values $\Delta y(i, j)$ of individual picture elements of the difference picture image of the monitoring picture area for the entire screen transmitted thereto from the filter circuit 5 and calculates a picture element density average value $\Delta ym$ of the difference picture image in accordance with the following expression:

$$\Delta ym = \{\Sigma\Delta y(i, j)\}/(\text{number of picture elements added})$$

The picture element density average value $\Delta ym$ obtained in this manner represents a degree of a characteristic amount to be extracted by the filter circuit 5 such as, for example, a degree of contrast or brightness. When the value of the picture element density average value $\Delta ym$ is high, this represents that the monitoring object area involves a large amount of the characteristic, but on the contrary when the value of the picture element density average value $\Delta ym$ is low. this represents that the monitoring object area includes a small amount of the characteristic.

The binary digitizing circuit 7 converts a difference picture image transmitted thereto from the filter circuit 5 into a binary picture image consisting of the binary values of "1" and "0" using a picture element density average value $\Delta ym$ received from the average value calculating circuit 6 as a threshold value for the binary digitization, and sends the binary picture image to the noise component suppressing circuit 8.

Meanwhile, the variation calculating circuit 9 calculates, using a picture element density average value or values in the past stored in a memory not shown thereof and a picture element density average value at present transmitted thereto from the average value calculating circuit 6, a variation m of the picture element density average value at present with respect to the picture element density average value or values in the past in accordance with the following expression:

m = {current picture element density average value}/{average of picture element density average value or values in the past}

The variation m assumes m = 1 when the brightness of the monitoring object area presents no change, but is m > 1 when the brightness presents an increase and m < 1 when the brightness presents a decrease.

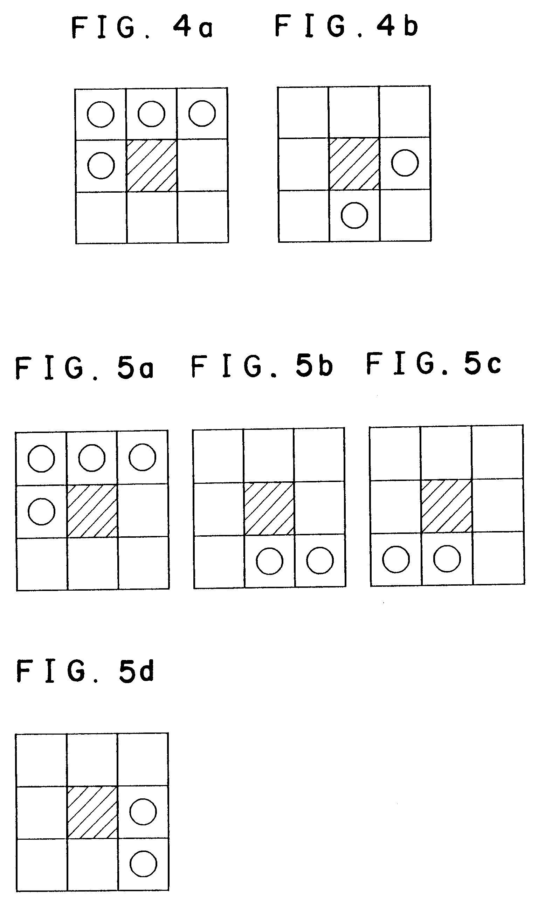

The noise component suppressing circuit 9 removes noise components of a binary picture image. The noise removing processing is realized, in principle, by judging, preparing a mask of a predetermined size, for example, such a mask of a $3 \times 3$ picture element size as shown in FIG. 4 or 5, whether or not a picture element at the central position of the mask is a noise in accordance with a distributing condition of the binary values of "1" and "0" of picture elements around the central picture element. Such judging processing is performed displacing the mask one after another picture element from the left end to the right end of the upper end of the screen of the binary picture image, and after the right end is reached, the mask is displaced by one picture element distance downwardly in the vertical direction and then similar processing is repeated from the left end to the right end again until the lower end of the screen is reached.

Exemplary procedures of noise removing processing will be described with reference to FIGS. 4 and 5. It is to be noted that such noise removing processing is performed only when a central picture element of a mask is equal to "1".

① When only the central picture element is equal to "1" but all of the eight picture elements around the same are equal to "0":

The central picture element is regarded as a noise and replaced by "0". This is because, when only the central picture element is "1", it is considered to be an isolated point such as a noise.

② When three or more picture elements around the central picture element are equal to "1".

Since it is considered that the central picture element is not an isolated point such as a noise, it is left to be "1" as it is.

③ When only one picture element around the central picture element is equal to "1":

When the picture element of "1" is any one of picture elements at positions marked with ○ in FIG. 4a or 4b, the central picture element is left as it is, but in any other case, the central picture element is regarded as a noise and replaced by "0".

In the case of FIG. 4a, since the processing proceeds from the left top to the right bottom of the binary picture image, a picture element at a position marked with ○ is a determined picture element for which it has been judged whether or not it is a noise. Accordingly, when the picture element at a position marked with ○ is "1", probably the central picture element is a picture element of "1" connecting to such picture element.

On the other hand, in the case of FIG. 4b, a picture element at a position marked with ○ is a picture element for which it will thereafter be judged whether or not it is a noise, and when a picture element at a position marked with ○ is "1", probably the central picture element is an end point picture element of an edge connecting to the picture element at the position of ○.

④ When two picture elements around the central picture element are equal to "1":

When only any two of picture elements at positions marked with ○ are "1" as shown in FIG. 5a, the central picture element is left as it is, but otherwise, the central picture element is regarded as a noise and replaced by "0". The judgment principle of the case of FIG. 5a is similar to that of the case of FIG. 4a.

Further, when two of picture elements at positions marked with ○ are "1" as shown in any one of FIGS. 5b to 5d, the central picture element is left as it is, but otherwise, it is regarded as a noise and replaced by "0". This is intended, since a wrinkle of clothes which can be regarded as a noise upon picture processing appears in most cases as an edge line of an L-shape, to remove such edge line as a noise and extract only an edge line of an L-shape, which is present frequently on a profile of an article, as significant picture elements.

A binary picture image from which noises have been removed in such a manner as described above is sent to the picture image change detecting section 10, at which such detecting processing for a change of a picture image as described below is executed.

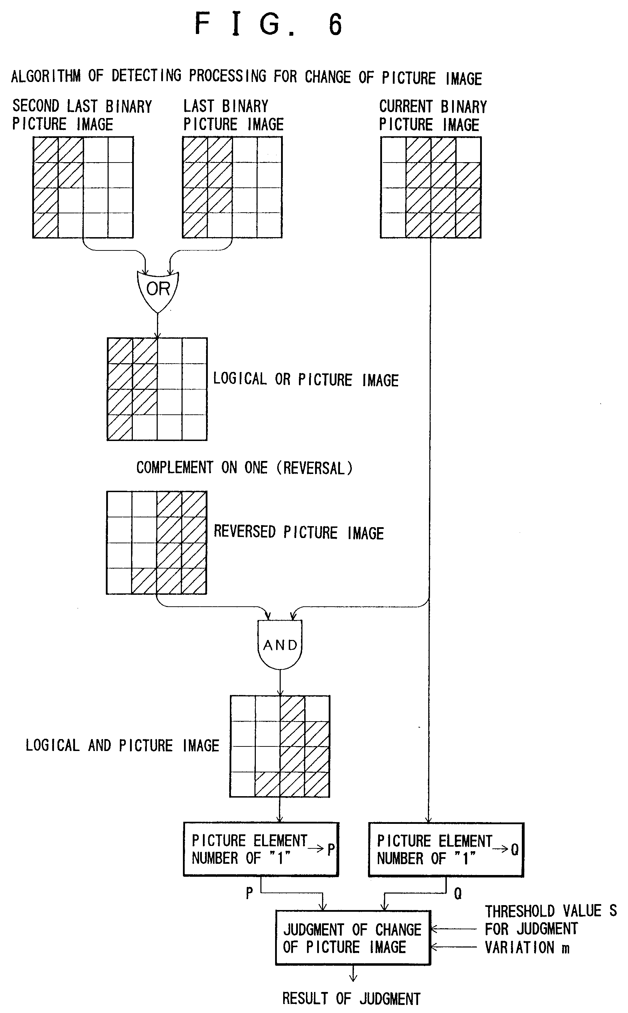

The algorithm in detecting processing for a change of a picture image by the picture image change detecting section 10 is illustrated in FIG. 6. It is to be noted that FIG. 6 illustrates, for the simplification of description, a case wherein the screen of a binary picture image has a $4 \times 4$ picture element size and the picture image storage circuit 13 in the picture image change detecting section 10 is constructed such that it stores therein two picture images including a binary picture image of the last frame of the monitoring object area and another binary picture image of the second last frame.

Referring to FIG. 6, first, a binary picture image of the last frame and another binary picture image of the second last frame are read out from the picture image storage circuit 13 and the two picture images are logically ORed, and then, a logical OR picture image thus obtained is reversed (complemented on one) to obtain a reverse picture image.

Subsequently, the reverse picture image and a binary picture image at present transmitted thereto from the noise component suppressing circuit 8 are logically ANDed to obtain a logical AND picture image. The logicaL AND picture image obtained in this manner is a binary picture image which consists only of those picture elements which were equal to "0" in picture element density in the binary picture image in the past but present a change in picture element density from "0" to "1" in the binary picture image at present.

The judging circuit 11 counts a number of picture elements of "1" in the logical AND picture image. The thus counted picture element number is represented by P and indicates a total number of picture elements which present the change from "0" to "1" in the binary picture image of the monitoring object area at present. The difference degree calculating circuit 11 also counts a number of picture elements of "1" in the binary picture image at present. The thus counted picture element number is represented by Q and indicates a total number of picture elements of "1" in the binary picture image of the monitoring object area at present.

Here, a degree of brightness is employed as a characteristic amount. The judging circuit 11 executes judgment of a change of a picture image using the picture element number P by which picture elements have changed from "0" to "1", the total number Q of picture elements of "1" in the binary picture image of the monitoring area at present, a threshold value S for the judgment of a change of a picture image preset to the threshold value setting circuit 12 and the variation m of a picture element density average value transmitted thereto from the variation calculating circuit 9, in accordance with the following expression:

$$(P/m) > (S \times Q)$$

When the judgment expression stands, the judging circuit 11 judges that the picture image has a change.

It is to be noted that, in the expression above, the threshold value S specifies a ratio of picture elements which have changed from "0" to "1" and varies within the range of S = 0 to 1.0 (0 % to 100 %). Meanwhile, as described hereinabove, the variation m is m = 1 when the brightness of the monitoring object area does not present a change, but is m > 1 when the brightness presents an increase and m < 1 when the brightness presents a decrease.

The calculation expression given above has such significance as follows. First, as a basic principle, when the number P of picture elements of the binary picture image of the monitoring object area at present which have changed from "0" to "1" is higher than a predetermined rate (threshold value S) to the total number Q of picture elements of "1" in the binary picture image, it is judged that the picture image has a change.

Further, upon such judgment as described above, the number P of picture elements which have changed from "0" to "1" is divided by the variation m of a picture element density average value indicative of a changing rate of brightness of the monitoring object area to effect correction in accordance with the change of the brightness of the monitoring object area. Such correction is performed from the following reason.

If the brightness of the monitoring object area, for example, increases from that in the past, the number of picture elements of "1" in the binary picture image of the monitoring object area at present increases in proportion to such increase. Accordingly, in logical ANDing processing as seen in FIG. 6, the binary picture image of the monitoring object area at present wherein the number of "1" has increased as the brightness has increased and a reverse picture image of the picture image of the monitoring area in the past are logically ANDed.

Consequently, the logical AND picture image obtained includes a number P of picture elements which has increased from an original number of picture elements by a number by which the binary value "1" has increased. A correct result of judgment cannot be obtained unless the number thus increased is cancelled. Thus, according to the present invention, the picture element number P is divided by the variation m of the picture element density average value of the binary picture image at present to return the picture element number P to its original picture element number. This makes it possible to detect a change of a picture image accurately even if the brightness of the monitoring object area changes.

In the case of the example shown in FIG. 6. the number P of picture elements of "1" in the logical AND picture image is 8, and the number Q of picture elements of "1" in the binary picture image at present is 11. Now, in case the threshold value S is set to S = 0.6 (60 %) and the variation m of a picture element density average value is m = 1, that is, the brightness of the monitoring object area presents no change,

(P/m) = 8/1 = 8 and (S × Q) = (0.6 × 11) = 6. 6.

Consequently, the judgment expression stands because 8 > 6.6. Accordingly, in this instance, it is judged that there is a picture image change in the monitoring object area being photographed by the video camera 1.

In the meantime, in case the brightness of the monitoring object area has increased by 50 % or so comparing with that in the past and the variation m of the picture element density average value is m = 1.5,

$$(P/m) = 8/1.5 \doteqdot 5.3,$$

and consequently, the judgment expression does not stands because 5.3 > 6.6. Accordingly, it is judged that the picture image change in this instance does not arise from an intrusion of a strange person but arises from a change of the brightness of the monitoring object area, and consequently, it is judged that there is no picture image change in the monitoring object area.

It is to be noted that, while the judgment expression given hereinabove is indicated in the form of (P/m) > (S × Q) including a division so that physical significance of the judging processing may be recognized, when the judging processing is to be processed by software using a microcomputer, another judgment expression of the multiplication form of P > (m × S × Q) wherein the variation m has been transposed to the right side may be employed in place of the expression of the form of a division which is complicated and requires much time.

The judging circuit 11 outputs, when it detects a picture image change of the monitoring object area, a switching on signal to instruct the TV monitor 2 of switching on of a switch not shown thereof. In response to such signal, the switch of the TV monitor 2 is switched on so that a picture image of the monitoring object area being photographed by the video camera 1 is automatically reflected on the screen of the TV monitor 2.

Accordingly, a watchman can automatically become aware that some abnormal condition, for example, an intrusion of a strange person, has occurred in the monitoring object area as the picture image of the monitoring object area is reflected on the TV monitor 2. Consequently, the screen of the TV monitor 2 need not be watched continuously as with the conventional system.

After the judging processing for a change of a picture image is completed in such a manner as described above, the average value calculating circuit 6 stores the picture element density average value of the binary picture image of the monitoring object area at present in place of the picture element density average value of one of the binary picture images which is oldest in time while the picture image storage circuit 13 in the picture image change detecting section 10 stores the binary picture image of the monitoring object area at present in place of the binary picture image oldest in time in order to prepare for similar judging processing for a change of a picture image with regard to a frame subsequent to that described hereinabove.

It is to be noted that, while the embodiment described above illustrates a case wherein processing is executed using a Y signal as a picture image signal, it can be realized similarly also where a C signal or a composite signal is used.

Further, while difference calculation to extract a high frequency component is adopted as filtering processing of the filter circuit 5 in FIG. 1, monitoring may be performed using a low frequency component or a predetermined band-pass component as described hereinabove.

Further, while a variation m of a picture element density average value at the variation calculating circuit 9 is calculated as a ratio to an average of picture element density average values of a plurality of frames in the past, a substantially mid value or a most frequent value of picture element density average values of a plurality of frames in the past may be used to find out such ratio in order to simplify the processing.

Further, while the picture image change detecting circuit 10 executes judging processing of a picture image change using a calculated variation m of a picture element density average value directly as it is, it is possible to effect finer judging processing by numerical value conversion in accordance with a function using the variation m as a variable such as stepwise increasing or decreasing of the variation or fixation of the variation to a fixed value when the variation exceeds a certain value.

Further, while a picture image photographed by the video camera 1 is reflected as it is on the TV monitor 2, various displaying forms can be employed such that a binary picture image obtained by the binary digitizing circuit 7 is partially inserted into the screen on which the picture image is reflected so as to inform a watchman of a location to which attention is to be paid.

Further, a watchman may be informed of occurrence of an abnormal condition by an acoustic or optical alarm in addition to the TV monitor 2 or in place of the TV monitor 2.

Having now fully described the invention, it will be apparent to one of ordinary skill in the art that many changes and modifications can be made thereto without departing from the spirit and scope of the invention as set forth herein.

**Claims**

1. A picture image monitoring system, comprising:

a filter circuit for extracting a predetermined picture image characteristic from a picture image signal of a monitoring object area;

a binary digitizing circuit for converting an extracted characteristic picture image received from said filter circuit into a binary picture image; and

a picture image change detecting section for comparing a binary picture image of the monitoring object area at present received from said binary digitizing circuit and another binary picture image of the monitoring object area in the past with each other to detect a change of the picture image using a predetermined first threshold value.

2. A picture image monitoring system as claimed in claim 1, further comprising:

an average value calculating circuit for calculating a picture element density average value of an extracted characteristic picture image received from said filter circuit; and

a variation calculating circuit for calculating a variation of a picture element density average value received from said average value calculating circuit with respect to another picture element density average value in the past;

said binary digitizing circuit using a picture element density average value received from said average value calculating circuit as a second threshold value upon binary digitization thereby;

said picture image change detecting section correcting the first threshold value using a variation of a picture element density average value received from said variation calculating circuit.

3. A picture image monitoring system as claimed in claim 2, wherein said picture image change detecting section includes a threshold value setting circuit for setting the first threshold value S and calculates a picture element number P by which picture elements of a binary picture image from said binary digitizing circuit have changed from "0" to "1" of the binary values and a total number Q of picture elements of "1" in such binary picture image at present, said picture image change detecting section judging presence of a change of a picture image when the following expression stands:

$$\text{difference degree} = (P/m)/(S \times Q)$$

where m is a variation m a picture element density average value from said variation calculating circuit.

4. A picture image monitoring system as claimed in claim 3, wherein, in order to calculate the picture element number P, said picture image change detecting section first logically ORs two binary picture images of the last two frames to obtain a logical OR picture image, then complements the logical OR picture image on one to obtain a reverse picture image, and then logically ANDs the reverse picture image and a binary picture image at present from said binary digitizing circuit to obtain a logical AND picture image, and finally counts a number of picture elements of the logical AND picture image which have the binary value of "1" to obtain the picture element number P.

5. A picture image monitoring system as claimed in claim 1, further comprising image pickup means for photographing the monitoring object area and sending a picture image signal of the monitoring object area to said filter circuit.

6. A picture image monitoring system as claimed in claim 1, wherein said picture image change detecting section includes a picture image storage circuit for storing therein at least one binary picture image of a frame from said binary digitizing circuit.

7. A picture image monitoring system as claimed in claim 1, further comprising a noise component suppressing circuit interposed between said binary digitizing circuit and picture image change detecting section for removing noise components from a binary picture image from said binary digitizing circuit.

8. A picture image monitoring system as claimed in claim 1, wherein the predetermined picture image characteristic to be extracted by said filter circuit from a picture image signal of a monitoring object area is a brightness of the picture image of the monitoring object area.

# F I G . 1

# F I G. 2

# F I G. 3

# FIG. 4a   FIG. 4b

# FIG. 5a   FIG. 5b   FIG. 5c

# FIG. 5d

# F I G. 6

ALGORITHM OF DETECTING PROCESSING FOR CHANGE OF PICTURE IMAGE

SECOND LAST BINARY PICTURE IMAGE

LAST BINARY PICTURE IMAGE

CURRENT BINARY PICTURE IMAGE

OR

LOGICAL OR PICTURE IMAGE

COMPLEMENT ON ONE (REVERSAL)

REVERSED PICTURE IMAGE

AND

LOGICAL AND PICTURE IMAGE

PICTURE ELEMENT NUMBER OF "1" → P

PICTURE ELEMENT NUMBER OF "1" → Q

P

Q

JUDGMENT OF CHANGE OF PICTURE IMAGE

THRESHOLD VALUE S FOR JUDGMENT

VARIATION m

RESULT OF JUDGMENT

# F I G. 7

## PRIOR ART

## DOCUMENTS CONSIDERED TO BE RELEVANT

EP 92105538.0

| Category | Citation of document with indication, where appropriate, of relevant passages | Relevant to claim | CLASSIFICATION OF THE APPLICATION (Int. Cl.5) |
|---|---|---|---|
| A | DE - A - 3 842 356 (SPIES) * Abstract; fig. 1; claims 1-4 * | 1-3,5 | H 04 N 7/18 H 04 N 5/14 G 08 B 13/196 |
| A | DE - A - 3 634 628 (MATSUSHITA) * Abstract; fig. 2,20,27; claims 1-4,22,27,28 * | 1-5,7, 8 | |

**TECHNICAL FIELDS SEARCHED (Int. Cl.5)**

H 04 N
G 08 B

The present search report has been drawn up for all claims

| Place of search | Date of completion of the search | Examiner |
|---|---|---|
| VIENNA | 20-11-1992 | FUSSY |

EPO FORM 1503 03.82 (P0401)